# EUROPÄISCHE PATENTANMELDUNG

(11) **EP 4 219 179 A1**
(43) Veröffentlichungstag der Anmeldung: **02.08.2023**
(21) Anmeldenummer: 22208478.2
(22) Anmeldetag: 21.11.2022
(51) Int. Cl.: B41M 5/00, B41M 7/00, B41M 3/00, B41M 3/06, B41M 3/16

(54) **VERFAHREN ZUM STRAHLUNGSGEHÄRTETEN RELIEFDRUCK AUF BEHÄLTER**

(30) Priorität: 24.01.2022 DE 102022101561
(71) Anmelder: Krones AG, 93073 Neutraubling (DE)
(72) Erfinder: Lyashenko, Alexandra, 93073 Neutraubling (DE); Augst, Peggy, 93073 Neutraubling (DE)
(74) Vertreter: Grünecker Patent- und Rechtsanwälte PartG mbB

(57) **Zusammenfassung**

Beschrieben wird ein Verfahren zum strahlungsgehärteten Reliefdruck (2) auf Behälter (1), wobei wenigstens zwei Druckschichten (3-6) mittels Tintenstrahl übereinander auf eine Behälteroberfläche (1a) aufgetragen und nacheinander mittels Bestrahlung (9) so gehärtet werden, dass die Druckschichten, insbesondere Randbereiche (3a-6a) davon, übereinander und/oder aneinander verlaufen können. Dadurch können Höhe und Konturen reliefartiger Druckbilder durch strahlungsinduziert begrenzte Glättung flexibel und effizient angepasst werden.

## Beschreibung

Die Erfindung betrifft ein Verfahren zum strahlungsgehärteten Reliefdruck auf Behälter und einen derart bedruckten Behälter.

Ein Verfahren zum strahlungsgehärteten Reliefdruck auf Behälter, bei dem mehrere Druckschichten mittels Tintenstrahl übereinander auf eine Behälteroberfläche aufgetragen und nacheinander mittels Bestrahlung gehärtet werden, ist aus der WO 2020/180478 A2 bekannt. Hierfür werden im Halbtondruck erhabene Strukturen mehrlagig auf die Behälteroberflächen direkt aufgedruckt. Die Höhe der erhabenen Strukturen und deren Verlauf an ihren zur Behälteroberfläche hin abfallenden Flanken ergibt sich dann aus den jeweiligen Graustufenwerten der Druckschichten in den einzelnen Bereichen des zu erzeugenden Druckbilds. Das heißt, in Bereichen, die mit höheren Graustufenwerten bedruckt werden, resultieren entsprechend höhere Aufdrucke als in Bereichen mit demgegenüber niedrigeren Graustufenwerten.

Nachteilig hierbei ist, dass ein derartiger Halbtondruck vergleichsweise viele Druckschichten zur Erzeugung der gewünschten Reliefstrukturen erfordert und demzufolge vergleichsweise aufwendig ist und/oder sich nicht für einen gegebenenfalls vorzunehmenden Volltondruck eignet.

Es besteht daher Bedarf für alternative Verfahren zum strahlungsgehärteten Reliefdruck auf Behälter, mit denen sich insbesondere wenigstens einer der genannten Nachteile vermeiden oder zumindest abmildern lässt.

Die gestellte Aufgabe wird mit einem Verfahren nach Anspruch 1 und mit einem Behälter nach Anspruch 14 gelöst. Bevorzugte Ausführungsformen sind in den Unteransprüchen angegeben.

Demnach dient das beschriebene Verfahren zum strahlungsgehärteten Reliefdruck auf Behälter, wobei wenigstens zwei Druckschichten mittels Tintenstrahl übereinander auf eine Behälteroberfläche, beispielsweise einer Seitenwand eines Behälters, aufgetragen und nacheinander mittels Bestrahlung so gehärtet werden, dass die Druckschichten, insbesondere Randbereiche davon, übereinander und/oder aneinander verlaufen können. Hierfür können die Druckschichten einzeln und/oder gemeinsam bestrahlt werden.

Dadurch können Höhe und Konturen reliefartiger Druckbilder durch strahlungsinduziert begrenzte Glättung flexibel und effizient angepasst werden. Durch das zugelassene Verlaufen der Druckschichten an ihren Randbereichen übereinander und/oder aneinander können in einer zugeordneten elektronischen Druckvorlage vorgegebene Dickenabstufungen an den Randbereichen gezielt geglättet, also beispielsweise abgeflacht und abgerundet werden. Auch die Dicke der resultierenden Druckschichten und die Höhe der Druckbilder lässt sich so entsprechend beeinflussen.

Derart übereinander gedruckte Druckschichten ergänzen sich generativ zu reliefartigen Oberflächenstrukturen. Deren Höhe und Flankenkontur können durch das zugelassene Verlaufen der Randbereiche gezielt beeinflusst werden. Stärkeres Verlaufen führt zu dünneren Druckschichten mit glattflächigeren Flankenkonturen und umgekehrt. Insbesondere können unerwünscht stark abgestufte Konturen vermieden werden. Dies ist erfindungsgemäß auch im Volltondruck möglich, also ohne Grauwertabstufung im Bereich von Reliefflanken.

Unter einem Reliefdruck ist hierbei zu verstehen, dass ein reliefartiges Druckbild auf Behältern, wie beispielsweise Flaschen, Dosen, Bechern, Trinkgläsern oder Tuben erzeugt wird. Hierfür werden Druckschichten aufeinandergeschichtet, indem wenigstens eine Tinte, wenigstens ein Lack und/oder dergleichen Druckfarbe aus wenigstens einem Druckkopf auf einer Behälteroberfläche nacheinander mittels Strahlauftrag, also nach dem Prinzip des Tintenstrahldrucks, schichtweise aufgebracht wird. Auf der Behälteroberfläche werden somit erhabene Bereiche generativ aufgebaut, deren Form durch das zugelassene Verlaufen der Druckschichten geglättet wird. Daraus resultieren schließlich die Relieferhebungen und gegebenenfalls Reliefvertiefungen des Druckbilds.

Die Ränder der Druckschichten bauen somit im Wesentlichen die Reliefflanken der erzeugten Relieferhebungen und/oder Reliefvertiefungen auf. Die Ränder können in der Draufsicht auf das Druckbild geradlinig, abgekantet, konvex gekrümmt und/oder konkav gekrümmt verlaufen. Das heißt, aus den Rändern der Druckschichten aufgebaute Reliefflanken können auch Innenkonturen des Druckbilds ausbilden, wie beispielsweise Wände kraterförmiger Reliefvertiefungen, Wände von steilkurvenartigen Strukturen oder dergleichen.

Das Verlaufen / Glätten innerhalb einer geeigneten Zeitspanne wird durch strahlungsinduzierte Härtung begrenzt, welche vorzugsweise nur unvollständig ist im Sinne eines das Fließverhalten der Druckschichten kontrollierenden Anhärtens, was auch als Pinnen bezeichnet wird. Ein Aushärten der Druckschichten erfolgt dann in der Regel erst nach Auftrag sämtlicher Druckschichten durch eine abschließende Bestrahlung.

Ausgehend von zugehörigen elektronischen Druckvorlagen und einem aus Sicht der Druckersteuerung zu den Rändern hin abgestuften Schichtauftrag verlaufen die Druckschichten dann nach außen und unten (zur Behälteroberfläche hin), sodass das daraus resultierende reliefartige Druckbild gegenüber der Druckvorlage dreidimensional geglättet ist. Je nach Schichtaufbau an den Rändern und dem zugelassenen Verlaufen können aus den Druckschichten beispielsweise abgerundet stufige Reliefflanken oder solche mit glatter Flankenkontur, also ohne visuell wahrnehmbare Abstufungen, aufgebaut werden. Visuell glattflächige Flankenkonturen lassen sich beispielsweise dadurch herstellten, dass eine Druckschicht über die Ränder mehrerer darunterliegender Druckschichten läuft und diese dadurch überzieht.

Durch das strahlungsinduzierte Anhärten kann das Verlaufen der Druckschichten und somit die Dicke und Flankenkontur reliefartiger Strukturen, die aus den Druckschichten aufgebaut sind, relativ flexibel gesteuert werden. Die flächige Verteilung und die Höhenverteilung reliefartiger Druckbilder auf Behältern können durch elektronische Druckvorlagen grundlegend vorgegeben werden. Darauf basierend kann die Höhenverteilung durch das zugelassen Verlaufen geglättet und die Randschärfe der flächigen Verteilung entsprechend reduziert werden.

Vorzugsweise werden wenigstens zwei Druckschichten mittels Tintenstrahl übereinander auf die Behälteroberfläche aufgetragen und einzeln und/oder gemeinsam mittels Bestrahlung so gehärtet, dass Randbereiche der Druckschichten übereinander und/oder aneinander verlaufen können. Anders gesagt können Druckschichten zunächst aufeinander gedruckt werden und dabei in einem zugelassenen Ausmaß an ihren Randbereichen verlaufen, bevor sie gemeinsam in der beschriebenen Weise angehärtet werden. Ebenso kann wenigstens eine der Druckschichten unmittelbar nach ihrem Auftragen einzeln angehärtet werden.

Beispielsweise kann je nach Bestrahlungsdosis durch Härten einzelner Druckschichten bewirkt werden, dass diese weniger stark verlaufen, woraus größere Schichtdicken und ein in der Draufsicht schärferes Druckbild resultieren. Umgekehrt kann ein gemeinsames Härten mehrerer aufeinander gedruckter Druckschichten dazu führen, dass diese stärker verlaufen und sich somit dünnere Druckschichten und ein in der Draufsicht unschärferes Druckbild ergeben.

Es versteht sich, dass eine strahlungsinduzierte Anhärtung einzelner Druckschichten und eine gemeinsame strahlungsinduzierte Anhärtung mehrerer zuvor aufeinander gedruckter Druckschichten in beliebiger Abfolge miteinander kombiniert werden können.

Vorzugsweise werden wenigstens eine und insbesondere wenigstens zwei der Druckschichten im Volltondruck aufgetragen. Dadurch können vergleichsweise hohe Reliefstrukturen mit einer vergleichsweise geringen Anzahl von Druckschichten erzeugt und durch das zugelassene Verlaufen an ihren Rändern gezielt geglättet werden, beispielsweise um fließend abgestufte oder glattflächige Flankenkonturen zu erzeugen. Nichtsdestoweniger ist das Verfahren auch im Halbtondruck oder als Kombination von Volltondruck und Halbtondruck möglich.

Bei einer günstigen Ausführungsform überragt ein erster Randbereich einer der Druckschichten einen zweiten Randbereich einer direkt darunterliegenden Druckschicht in einer zugeordneten elektronischen Druckvorlage in seitlicher Richtung. Ferner lässt man den ersten Randbereich dann zur Behälteroberfläche hin so verlaufen, dass er den zweiten Randbereich in voller Höhe überzieht. Dadurch lässt sich die Kontur einer vom ersten und zweiten Randbereich aufgebauten Reliefflanke besonders stark glätten. Beispielsweise kann die oberste Druckschicht dann die Randbereiche mehrerer und insbesondere sämtlicher darunterliegender Druckschichten in Form einer im Wesentlichen stufenlosen Reliefflanke überziehen und abdecken. Dadurch lassen sich optisch besonders ansprechende Reliefstrukturen mit visuell glatter Flankenkontur, also ohne sichtbare Abstufung, herstellen.

Es können aber auch Ausführungsformen vorteilhaft sein, bei denen ein dritter Randbereich der Druckschichten bezüglich eines vierten Randbereichs einer direkt darunterliegenden Druckschicht in einer zugeordneten elektronischen Druckvorlage seitlich zurückgesetzt ist. Lässt man dann den dritten Randbereich nach außen und zur Behälteroberfläche hin verlaufen, so ergibt sich eine geglättete Stufenkontur, also eine Reliefflanke mit außen abgeflachten und/oder abgerundeten Stufen. Dies kann beispielsweise aus haptischen Gründen vorteilhaft sein, wenn griffige Reliefstrukturen auf die Behälteroberfläche gedruckt werden sollen.

Denkbar wären auch kombinierte Druckvorlagen mit randseitig überhängendem Schichtaufbau (obiger erster und zweiter Randbereich) und/oder randseitig ansteigendem Schichtaufbau (obiger dritter und vierter Randbereich) und/oder randseitig vertikalem Schichtaufbau (seitlich bündig abschließende Randbereiche).

Jeder der Druckschichten ist beispielsweise eine insbesondere separate elektronische Druckvorlage zugeordnet, die festlegt, in welchen Bereichen eines herzustellenden Druckbilds die jeweilige Druckschicht aufgetragen werden soll und welche Bereiche des Druckbilds davon ausgespart werden. Dadurch ergeben sich die jeweiligen seitlichen Abmessungen im Sinne eines herkömmlichen zweidimensionalen Drucks der jeweiligen Druckschicht. Ferner kann die Druckvorlage Angaben zur gegebenenfalls örtlich variierenden Stärke der jeweiligen Druckschicht im Sinne einer flächenspezifischen Tinten-, Lack-, oder Farbmenge umfassen. Werden mehrere Druckschichten mit derselben Farbe und demselben Druckkopf gedruckt, können die schichtweise zugeordneten Druckvorlagen in einer gemeinsamen Datei bereitgestellt werden. Man könnte dann diesbezüglich auch von einer gemeinsamen Druckvorlage für mehrere Druckschichten sprechen.

Vorzugsweise bilden die Druckschichten auf der Grundlage jeweils zugeordneter elektronischer Druckvorlagen wenigstens einen relativ niedrigen Druckbildbereich mit wenigstens einer Druckschicht und wenigstens einen relativ hohen Druckbildbereich mit einer demgegenüber größeren Anzahl von Druckschichten im Sinne von Relieferhebung und/oder Reliefvertiefung aus. Das heißt, die Höhe von Relieferhebungen und die Tiefe von Reliefvertiefungen sowie deren Flankenkonturen werden zum einen durch die Anzahl dort aufeinander gedruckter Druckschichten und zum anderen durch Glättung infolge ihres Verlaufens festgelegt. Sowohl sogenannte Embossings als auch sogenannte Debossings können so vergleichsweise flexibel hergestellt werden.

Debossings können beispielsweise hergestellt werden, indem man die Behälter im Druckbereich vollflächig mehrschichtig bedruckt und davon vertiefte Bereiche, die als Debossing bezeichnet werden, ausspart. Debossings weisen somit eine reduzierte Anzahl von Druckschichten auf.

Vorzugsweise ist wenigstens eine der Druckschichten eine Farbschicht und wenigstens eine der Druckschichten eine Schutzlackschicht. Damit können unterschiedliche optische und haptische Effekte an den mittels der Druckschriften erzeugten Reliefstrukturen bereitgestellt werden.

Vorzugsweise werden Bestrahlungsdauern und/oder Bestrahlungsstärken für Schritte zur jeweiligen Anhärtung einer oder mehrerer der Druckschichten separat für die einzelnen Schritte parametriert. Damit lässt sich die Aufschichtung und die Glättung der reliefartigen Strukturen sowohl hinsichtlich ihrer Dicke als auch hinsichtlich ihrer Kontur an den jeweiligen Rändern gezielt und auf vergleichsweise flexible Art und Weise einstellen. Strahlungsstärke und Bestrahlungsdauer können beispielsweise an LED-Lichtquellen besonders einfach und flexibel gesteuert werden.

Vorzugsweise werden die Druckschichten durch Bestrahlung mit Licht im Wellenlängenbereich von 10 bis 460 nm und/oder mittels Elektronenstrahl angehärtet. Zur entsprechenden Aufschichtung und Glättung von Druckschichten sind sowohl insbesondere mittels UV-Licht aushärtende als auch mittels Elektronenstrahl aushärtende Tinten, Farben, Kleber und Lacke verfügbar. Somit lässt sich das erfindungsgemäße Verfahren mit einer Vielzahl von Tinten, Farben und Lacken anwenden und ermöglicht daher einen großen Gestaltungsspielraum.

Vorzugsweise werden Zeitintervalle zwischen Auftrag und Bestrahlung der Druckschichten durch Anpassung der Relativgeschwindigkeit der Behälteroberfläche bezüglich zugeordneter Druccköpfe und Strahlungsquellen eingestellt. Wird beispielsweise die Relativgeschwindigkeit der Behälteroberfläche (und die Druckgeschwindigkeit) erhöht, können die Druckschichten schneller angehärtet werden, wodurch die Randbereiche weniger stark verlaufen als bei niedrigeren Relativgeschwindigkeiten. Dadurch kann das Verlaufen der Randbereiche und damit die Glättung des erzeugten Druckbilds zusätzlich gesteuert werden. Die Zeitintervalle könnten auch eingestellt werden, indem man eine Leerdrehung (Drehung ohne Druck oder Bestrahlung) einfügt, beispielsweise eine derartige Vollumdrehung, Halbumdrehung, Drittelumdrehung, Viertelumdrehung oder anderweitige Teilumdrehung. Auch leere Mehrfachumdrehungen sind denkbar. Druckschichten können auf diese Weise später / verzögert angehärtet werden, ohne dafür die Dreh- und Druckgeschwindigkeit zu verändern.

Vorzugsweise werden die Behälter bei Auftrag und Härtung der Druckschichten um sich selbst gedreht, wobei man ihre Drehgeschwindigkeit für die Bestrahlung, insbesondere separat von einer Drehgeschwindigkeit beim Strahlauftrag, an eine Viskosität und/oder ein Fließverhalten der/des aufgetragenen Tinte, Lacks oder dergleichen Druckfarbe anpasst. Mit der Drehgeschwindigkeit lässt sich zum einen die Relativgeschwindigkeit der Behälteroberfläche bezüglich zugeordneter Druckköpfe und/oder Strahlungsquellen beeinflussen, zum anderen reduzieren bei der Drehung verursachte Fliehkräfte das Verlaufen der Druckschichten und damit die Glättung des erzeugten Druckbilds. Beispielsweise können Dicke und Randschärfe der jeweiligen Druckschicht durch Erhöhen der Drehgeschwindigkeit erhöht werden und umgekehrt. Dadurch kann die Glättung einzelner Druckschichten und/oder des daraus gebildeten Druckbilds insgesamt zusätzlich beeinflusst werden.

Vorzugsweise weisen die Druckschichten jeweils eine Dicke von 1 µm bis 200 µm auf, insbesondere von 10 µm bis 125 µm. Die Gesamtschichtdicke der Druckschichten beträgt dabei nach Aushärtung beispielsweise 1 µm bis 10 mm, insbesondere 20 µm bis 1 mm. Damit lässt sich eine Vielzahl von Reliefdruckbildern zur dekorativen und/oder haptischen Aufwertung von Behälteroberflächen herstellen.

Vorzugsweise werden die Dicken der Druckschichten ferner durch Anpassung wenigstens eines der folgenden Parameter der verwendeten Tinten/ Farben/ Lacke eingestellt: Viskosität; Oberflächenspannung; Ausstoßtemperatur; Ausstoßgeschwindigkeit; Tropfengröße oder Tropfenvolumen beim Ausstoß; und Härtungsgeschwindigkeit pro Bestrahlungsdosis; und/oder Aushärtungsdauer pro Bestrahlungsdosis, und/oder durch Anpassung der Zeit zwischen Drucken und Pinnen (Time-to-Pin). Beispielsweise kann das Verlaufen der Randbereiche der Druckschichten übereinander und/oder aneinander durch Anpassung der Bestrahlung an die durch wenigstens einen der voranstehend genannten Parameter definierten Eigenschaften der Tinten/ Farben/ Lacke angepasst werden.

Vorzugsweise werden die Druckschichten während eines kontinuierlichen Transports des Behälters, insbesondere auf einem Behälterkarussell, mittels demgegenüber stationären Druckköpfen angebracht.

Demnach eignet sich zum Ausführen des Verfahrens beispielsweise eine Vorrichtung umfassend: ein Transportmittel mit daran insbesondere umlaufend angeordneten und um sich selbst drehbaren Halterungen für die Behälter; Druckköpfe zum Strahlauftrag jeweils wenigstens einer Druckschicht auf die Behälter; und Strahlungsquellen zur Anhärtung einzelner und/oder mehrerer Druckschichten. Ferner umfasst die Vorrichtung dann beispielsweise ein programmierbares Steuerungssystem zum Steuern der Halterungen, Druckköpfe und Strahlungsquellen in Abhängigkeit von elektronischen Druckvorlagen, um die Druckschichten übereinander aufzutragen und so zu härten, dass Randbereiche der Druckschichten davon abhängig übereinander und/oder aneinander verlaufen können. Damit können reliefartig bedruckte Behälter mit den beschriebenen Vorteilen hergestellt werden.

Der erfindungsgemäße Behälter ist insbesondere eine Flasche, eine Dose, ein Becher, ein Trinkglas oder eine Tube und dient zur Aufnahme flüssiger Endprodukte wie Lebensmittel. Der Behälter umfasst ein mit dem Verfahren nach wenigstens einem der vorigen Ansprüche aufgetragenes reliefartiges Druckbild.

Bevorzugte Ausführungsformen der Erfindung sind zeichnerisch dargestellt. Es zeigen:
- Figuren 1A bis 1C: ein reliefartiges Druckbild mit unterschiedlich stark verlaufenen Druckschichten und der zugrundeliegende Schichtaufbau gemäß Druckvorlage;
- Figuren 2A und 2B: ein alternatives reliefartiges Druckbild mit verlaufenen Druckschichten und der zugrundeliegende Schichtaufbau gemäß Druckvorlage; und
- Figuren 3A bis 3C: Varianten des Schichtaufbaus gemäß Druckvorlagen; und
- Figur 4: ein alternatives Druckbild mit verlaufener Deckschicht.

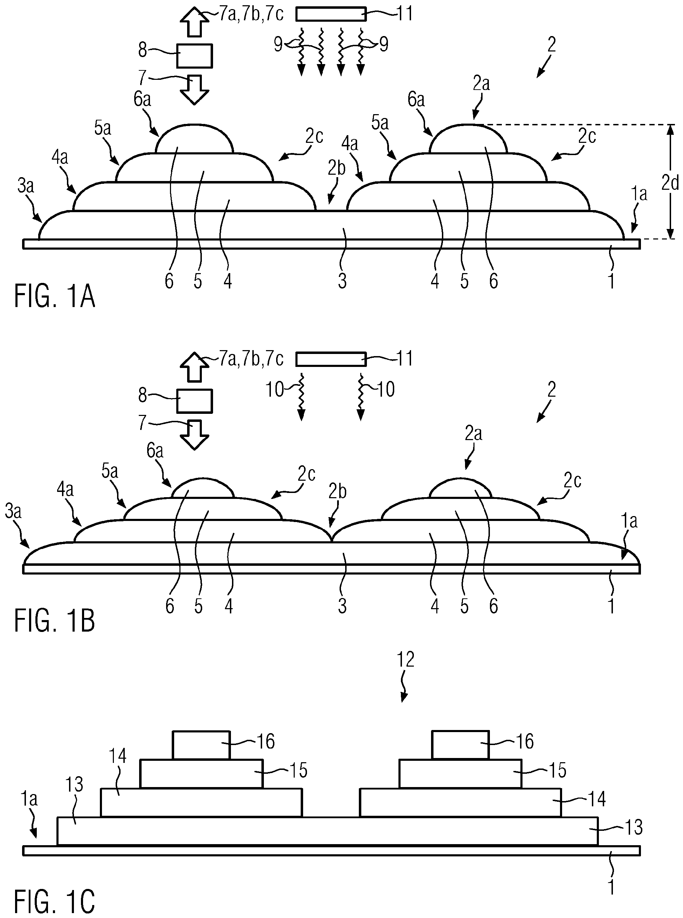

Die Figuren 1A und 1B zeigen schematisch und beispielhaft eine erste Ausführungsform des erfindungsgemäßen Verfahrens zum strahlungsgehärteten Reliefdruck auf Behälter 1, bei dem ein reliefartiges Druckbild 2 mit wenigstens zwei (im Beispiel vier) übereinanderliegenden Druckschichten 3 bis 6 auf eine Oberfläche 1a eines Behälters 1, beispielsweise auf einer Seitenwand, durch strahlförmigen Schichtauftrag 7 wenigstens einer Tinte 7a, eines Lacks 7b und/oder dergleichen Druckfarbe 7c aus wenigstens einem Druckkopf 8 aufgetragen und mittels Bestrahlung 9, 10 aus wenigstens einer Strahlungsquelle 11 derart angehärtet werden, dass Randbereiche 3a bis 6a der aufgetragenen Druckschichten 3 bis 6 übereinander und/oder aneinander verlaufen können.

Der jeweilige Druckkopf 8 kann prinzipiell für nur eine Tinte 7a, einen Lack 7b und/oder dergleichen Druckfarbe 7c ausgelegt sein. Der jeweilige Druckkopf 8 kann aber auch mit wenigstens zwei identischen und/oder unterschiedlichen Tinten 7a, Lacken 7b und/oder dergleichen Druckfarben 7c versorgt werden und diese auf geeignete Weise ausstoßen.

Die Druckschichten 3 bis 6 bauen auf diese Weise Relieferhebungen 2a und optional zudem Reliefvertiefungen 2b des Druckbilds 2 auf. Das jeweils bis zum und beim Anhärten zugelassene Verlaufen der Druckschichten 3 bis 6 führt dabei zu einer dreidimensionalen Glättung des Druckbilds 2 insbesondere an Reliefflanken 2c des Druckbilds 2.

Die Figuren 1A und 1B verdeutlichen im Vergleich demzufolge unterschiedlich stark verlaufene Druckschichten 3 bis 6 und somit unterschiedlich stark geglättete Relieferhebungen 2a (Embossings), Reliefvertiefungen 2b (Debossings) und Reliefflanken 2c, die nach zunächst identischem Schichtauftrag 7 aus unterschiedlichen Bestrahlungen 9, 10 und somit entsprechend unterschiedlicher Anhärtung der Druckschichten 3 bis 6 resultieren.

In der Figur 1A ist beispielhaft das Ergebnis nach separaten Bestrahlungen 9 der Druckschichten 3 bis 6 angedeutet. Da die jeweils unmittelbar zuvor aufgetragenen Druckschichten 3 bis 6 dann nur relativ wenig nach außen hin und zur Oberfläche 1a des Behälters 1 hin verlaufen können, resultieren daraus vergleichsweise dicke Druckschichten 3 bis 6 mit vergleichsweise steilen und deutlich abgestuften Reliefflanken 2c der Relieferhebungen 2a bzw. Reliefvertiefungen 2b.

In der Figur 1B ist dagegen beispielhaft das Ergebnis nach einer ersten gemeinsamen Bestrahlung 10 der unteren beiden Druckschichten 3 und 4 und einer zweiten gemeinsamen Bestrahlung 10 der oberen beiden Druckschichten 5 und 6 dargestellt. Demnach können die Druckschichten 3 bis 6 dann bis zur jeweiligen Anhärtung stärker verlaufen als bei ihrer separaten Bestrahlung 9, woraus dünnere Druckschichten 3 bis 6 und flachere sowie weniger stark abgestufte Reliefflanken 2c der Relieferhebungen 2a bzw. Reliefvertiefungen 2b resultieren.

Somit kann durch das strahlungsinduzierte Anhärten, auch Pinnen genannt, sowohl die Höhe 2d der resultierenden Relieferhebungen 2a als auch die Kontur der Reliefflanken 2c und insbesondere auch deren Stufigkeit gezielt verändert werden. Hierfür können sowohl die Stärke und Dauer der jeweiligen Bestrahlung 9, 10 gezielt angepasst werden als auch die Abfolge einzelner Schritte zum Schichtauftrag 7 (Druckvorgänge) und zur zugehörigen Bestrahlung 9, 10 (Anhärtungen).

Die Druckschichten 3 bis 6 könnten einzeln, also nach jedem Schichtauftrag 7, bestrahlt und angehärtet werden oder nur nach jedem zweiten, dritten, vierten oder fünften Schichtauftrag 7. Es ist prinzipiell auch denkbar, die Abfolge von Schichtauftrag 7 (Druckvorgang) und Bestrahlung 9, 10 (Anhärtung) der Druckschichten 3 bis 6 je nach gewünschter Höhe 2d, Tiefe und Glättung der Relieferhebungen 2a, Reliefvertiefungen 2b und Reliefflanken 2c uneinheitlich zu gestalten.

So könnten bestimmte Druckschichten 3 bis 6 einzeln, andere dagegen gemeinsam bzw. gruppenweise bestrahlt und angehärtet werden.

Hierbei ist die Anzahl der dargestellten und beschriebenen Druckschichten 3 bis 6 nur beispielhaft und dient einer verständlichen Darstellung. In der Praxis kann insbesondere eine größere Anzahl von Druckschichten 3 bis 6 aufgetragen und wie beschrieben bestrahlt und angehärtet werden, um die Druckschichten 3 bis 6 dadurch beim Aufbau des reliefartigen Druckbilds 2 kontrolliert verlaufen zu lassen.

Die Figur 1C verdeutlicht schematisch einen den Figuren 1A und 1B zugrundeliegenden und sich nach oben (von der Oberfläche 1a weg) verjüngenden Schichtaufbau 12 der Druckschichten 3 bis 6. Der Schichtaufbau 12 kann als ein Stapel elektronischer Druckvorlagen 13 bis 16 für die einzelnen Druckschichten 3 bis 6 verstanden werden und repräsentiert das Druckbild 2 aus Sicht der Druckersteuerung, also ohne Verlaufen der Druckschichten 3 bis 6.

Die Druckvorlagen 13 bis 16 legen die einzelnen Druckflächen und die Druckstärken der Druckschichten 3 bis 6 für das herzustellende Druckbild 2 fest. Dies ist in der Figur 1C im seitlichen Schnitt schematisch angedeutet. Der Schichtaufbau 12 ist im Sinne eines Volltondrucks mit jeweils einheitlicher Druckstärke (Schichtdicke) der einzelnen Druckvorlagen 13 bis 16 für die Druckschichten 3 bis 6 dargestellt und an deren (gedachten) Rändern 3a bis 6a entsprechend stufenförmig. Diese Abstufung wird durch das vor dem und beim Anhärten gezielt zugelassene Verlaufen der Druckschichten 3 bis 6 geglättet. Dabei verringert sich auch deren Dicke gegenüber den zugehörigen Druckvorlagen 13 bis 16 entsprechend.

Ergänzend oder alternativ kann das Verlaufen der Druckschichten 3 bis 6 bis zur jeweiligen Anhärtung auch in Kombination mit einem Halbtondruckdruck (Graustufendruck) wie beschrieben zugelassen werden. In diesem Fall würde die Druckstärke (Schichtdicke) der Druckvorlagen 13 bis 16 entsprechend variieren.

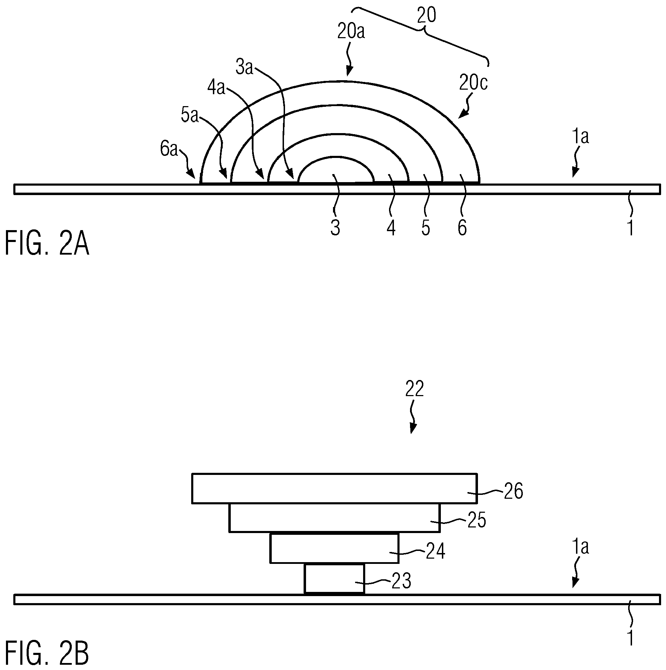

In der Figur 2A ist ein alternatives reliefartiges Druckbild 20 mit einer Relieferhebung 20a und Reliefflanken 20c dargestellt, wobei sich die Druckschichten 3 bis 6 an ihren Randbereichen 3a bis 6a vollständig im Sinne eines Überzugs von oben nach unten überdecken. Optionale Reliefvertiefungen wurden hier der Übersichtlichkeit halber weggelassen.

Grundlage dafür ist ein in der Figur 2B schematisch und beispielhaft dargestellter Schichtaufbau 22, der als ein sich nach unten (zur Oberfläche 1a hin) verjüngender Stapel elektronischer Druckvorlagen 23 bis 26 für die einzelnen Druckschichten 3 bis 6 verstanden werden kann. Werden die Druckschichten 3 bis 6 dementsprechend übereinander aufgetragen, überragen sie die jeweils direkt unterhalb angrenze Druckschicht gemäß Druckvorlagen 23 bis 26 (also ohne Verlaufen) in seitlicher Richtung. Man lässt die Druckschichten 3 bis 6 im zuvor beschriebenen Sinn dann derart verlaufen, dass sie sich gegenseitig in den Randbereichen 3a bis 6a vorzugsweise in voller Höhe überziehen.

Auf diese Weise lässt sich eine Relieferhebung 20a mit besonders glatten, beispielsweise im Wesentlichen stetig verlaufenden Reliefflanken 20c aus den Druckschichten 3 bis 6 aufbauen. Die Reliefflanken 20c weisen dann gegebenenfalls keine sichtbare Abstufung mehr auf. Dies kann aus gestalterischer Sicht vorteilhaft sein. Andererseits können abgestufte Reliefflanken 2c aus haptischen Gründen vorteilhaft sein, beispielsweise um besonders griffige Druckbilder 2 auf der Oberfläche 1a der Behälter 1 zu erzeugen.

Wie die Figuren 1C und 2B schematisch in Form einheitlicher Schichtdicken andeuten, können die Druckvorlagen 13 bis 16 und 23 bis 26 jeweils einen Volltondruck der Druckschichten 3 bis 6 vorgeben. Es wäre prinzipiell aber auch denkbar, wenigstens eine der Druckschichten 3 bis 6 im Halbtondruck aufzutragen, beispielsweise um Farbverläufe zu ermöglichen und/oder die Kontur der Reliefflanken 2c in den Randbereichen 3a bis 6a bereits druckerseitig vorzuformen.

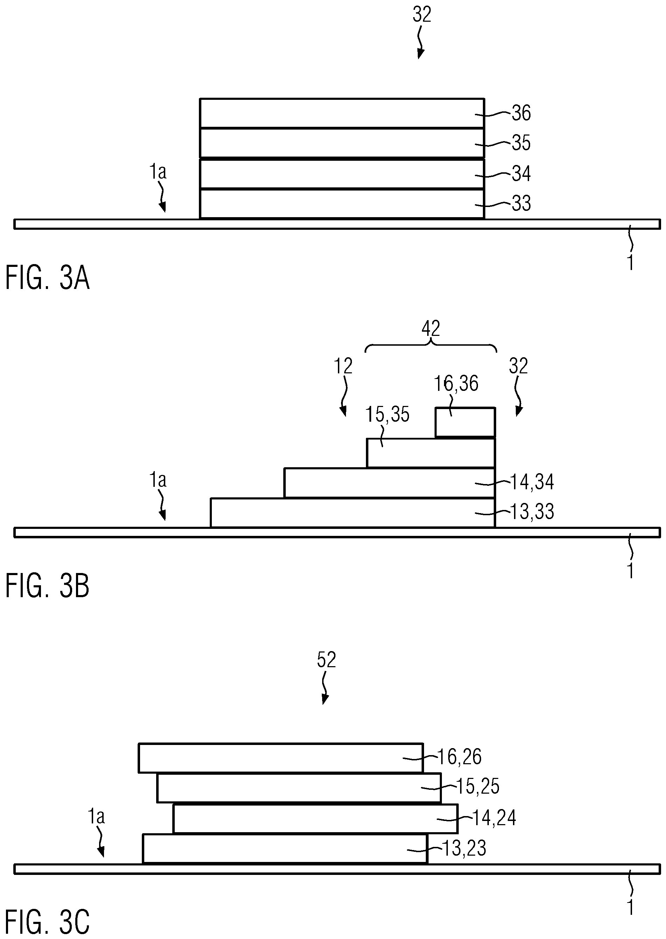

Die Figuren 3A bis 3C deuten schematisch an, dass sowohl ein seitlich fluchtender Schichtaufbau 32 mit randseitig entsprechend in vertikaler Richtung fluchtenden Druckvorlagen 33 bis 36 zur Ausbildung der Druckschichten 3 bis 6 möglich ist als auch prinzipiell beliebige Varianten 42, 52 des Schichtaufbaus mit Kombinationen der voranstehend beschriebenen Varianten 12, 22, 32 des Schichtaufbaus bzw. der zugehörigen Druckvorlagen 13 bis 16, 23 bis 26 und 33 bis 36.

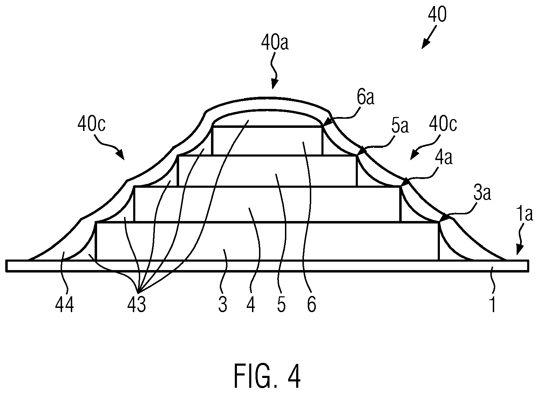

Die Figur 4 zeigt schematisch und beispielhaft eine weitere Variante des Verfahrens, bei der ein Druckbild 40 umfassend wenigstens eine Relieferhebung 40a und/oder wenigstens eine (nicht dargestellte) Reliefvertiefung erzeugt wird, indem zuerst Druckschichten 3 bis 6 im Volltonverfahren aufeinander gedruckt werden, um die grundlegende und sich vorzugsweise nach oben hin verjüngende Kontur der Relieferhebung 40a und der zugehörigen Reliefflanken 40c aufzubauen. Anschließend werden die Randbereiche 3a bis 6a der Druckschichten 3 bis 6 durch auffüllende und/oder abdeckende Druckschichten 43, 44 glättend überzogen.

Demnach können die Druckschichten 3 bis 6 an ihren Randbereichen 3a bis 6a aufgrund des Volltondrucks stufenförmig aufeinander aufbauen. Dieser abgestufte Flankenverlauf wird dann beispielsweise durch wenigstens eine Druckschicht 43 zumindest teilweise glättend aufgefüllt und von wenigstens einer Druckschicht 44 insgesamt abgedeckt bzw. überzogen. Man trägt dann beispielsweise so viele Druckschichten 43, 44 auf, bis eine gewünschte Oberflächenglätte des Druckbilds 40 erreicht ist. Die auffüllenden und abdeckenden Druckschichten 43, 44 bestehen beispielsweise aus Deckfarbe und/oder Schutzlack.

Wenigstens die auffüllenden und abdeckenden Druckschichten 43, 44 werden in der beschriebenen Weise durch Schichtauftrag 7 und einzelne und/oder gemeinsame Bestrahlung 9, 10 derart aufeinandergedruckt und angehärtet, dass sie an den stufenförmigen Randbereichen 3a bis 6a der angrenzenden bzw. darunterliegenden Druckschichten 3 bis 6 verlaufen können.

Ein glättendes Verlaufen der (die Kontur von Relieferhebungen 40a und/oder Reliefvertiefungen grundlegend im Volltondruck aufbauenden) Druckschichten 3 bis 6 kann auf die beschriebene Weise prinzipiell ebenso zugelassen oder aber zugunsten eines schnelleren und/oder höheren Konturaufbaus von Relieferhebungen 40a weggelassen bzw. unterdrückt werden. Letzteres ist in der Figur 4 durch scharfkantige Abstufung der angehärteten Randbereiche 3a bis 6a schematisch angedeutet.

Unabhängig davon, ob die einzelnen Druckschichten 3 bis 6, 43 und 44 im Halbtonverfahren (Graustufendruck) oder im Volltonverfahren (Schwarz-Weiß-Druck) aufgetragen werden, kann die jeweilige Dicke der Druckschichten 3 bis 6, 43 und 44 und damit die Höhe des in der Summe resultierenden reliefartigen Druckbilds 2, 20, 40 insgesamt durch die Parametrierung der Bestrahlung 9, 10 und das dadurch bewirkte Anhärten (Pinnen) der Druckschichten 3 bis 6, 43 und 44 gezielt beeinflusst werden.

Je stärker und/oder länger und/oder je häufiger bezogen auf die Anzahl der Druckschichten 3 bis 6, 43 und 44 bestrahlt wird, desto schneller härten die einzelnen Druckschichten 3 bis 6, 43 und 44 an, wodurch die aufgetragenen Tinten 7a, Lacke 7b oder dergleichen Druckfarben 7c weniger stark verlaufen können. Dies resultiert in einer größeren Schichtdicke und in einem schärferen Druckbild und somit in steileren Reliefflanken 2c, 20c, 40c der Relieferhebungen 2a, 20a, 40a bzw. Reliefvertiefungen 2b.

Beispielsweise könnte für eine praktikable Verarbeitung der Tinten 7a, Lacke 7b und/oder Druckfarben 7c eine Mindestanhärtung nach jeder zweiten, dritten oder vierten Druckschicht 3 bis 6, 43 und 44 prinzipiell ausreichend sein. Durch demgegenüber häufigere Bestrahlung und Anhärtung einzelner Druckschichten 3 bis 6, 43 und 44 könnte eine Relieferhebung 2a, 20a, 40a mit größerer Höhe und/oder aus weniger Druckschichten 3 bis 6, 43 und 44 aufgebaut werden. Umgekehrt kann durch eine verarbeitungstechnisch zulässige Reduzierung der Bestrahlung 9, 10 die Steilheit und die Stufigkeit der Reliefflanken 2c, 20c, 40c gezielt verringert und das reliefartige Druckbild 2, 20, 40 somit geglättet werden.

Zusätzlich kann die Höhe und Kontur von Relieferhebungen 2a, 20a, 40a, Reliefvertiefungen 2b und Reliefflanken 2c, 20c, 40c durch die Viskosität und/oder das Fließverhalten der verwendeten Tinten 7a, Lacke 7b und/oder Druckfarben 7c sowie durch die Druckgeschwindigkeit beeinflusst werden. Je viskoser die verwendeten Tinten 7a, Lacke 7b und/oder Druckfarben 7c sind, desto höher und schärfer abgegrenzt sind die resultierenden Relieferhebungen 2a, 20a, 40a und gegebenenfalls der Reliefvertiefungen 2b, und umgekehrt.

Je höher die Druckgeschwindigkeit und/oder die Relativgeschwindigkeit der zu bedruckenden Oberfläche 1a ist, desto schneller können die Druckschichten 3 bis 6, 43 und 44 bestrahlt und angehärtet werden, wodurch wiederum die Dicke der Druckschichten 3 bis 6, 43 und 44 nicht so stark abnehmen kann und diese an ihren Randbereichen 3a bis 6a schärfer abgegrenzt sind.

Werden die Behälter 1 beim Schichtauftrag und Anhärten (und dazwischen) gedreht, so bewirken dabei auftretende Fliehkräfte, dass die aufgetragenen Druckschichten 3 bis 6, 43 und 44 weniger stark verlaufen können und somit dicker und mit schärferer Randabgrenzung aushärten.

Die Gesamtdicke der erzeugten Relieferhebungen 2a, 20a, 40a lässt sich in erster Linie mit der Anzahl der aufgetragenen Druckschichten 3 bis 6, 43 und 44 einstellen. Zusätzlich können Tinten 7a, Lacke 7b und/oder Druckfarben 7c gezielt hinsichtlich ihrer Viskosität und/oder ihres Fließverhaltens ausgewählt werden. Für den jeweiligen Tintenstrahldruck lässt sich zudem die Ausstoßtemperatur, die Ausstoßgeschwindigkeit sowie die Größe (das Volumen) der ausgestoßenen Tropfen gezielt anpassen.

Die Viskosität der verwendeten Tinten 7a, Lacke 7b und/oder dergleichen Druckfarben 7c liegt beispielsweise im Bereich von 1 bis 40 mPas bei 20 °C. Prinzipiell denkbar ist aber auch der Einsatz hochviskoser Tinten 7a, Lacke 7b, Druckfarben 7c mit Viskositätswerten von 40 bis 400 mPas. Die Ausstoßtemperaturen beim Tintenstrahldruck liegen beispielsweise zwischen 35 und 60 °C. Praktikable Druckgeschwindigkeiten liegen beispielsweise im Bereich von 200 bis 1500 mm/s. Das beschriebene Verfahren ist beispielsweise bei Druckauflösungen von 75 bis 1440 dpi möglich. Die Tropfengröße kann beispielsweise auf ein Volumen von 3 bis 300 pL eingestellt werden. Die Ausstoßgeschwindigkeit der Tintentropfen kann beispielsweise 3 bis 13 m/s betragen.

Für die Bestrahlung 9, 10 eignet sich beispielsweise Licht im Wellenbereich von 10 bis 460 nm. Alternativ ist die Bestrahlung 9, 10 aus einer Elektronenquelle möglich.

Das beschriebene Verfahren kann beispielsweise im folgenden Kontext eingesetzt werden: Zur Verbesserung der Oberflächeneigenschaften werden die Oberflächen 1a der Behälter 1 in der Regel vor dem Auftrag der Druckschichten 3 bis 6, 43 und 44 vorbehandelt. Bei Kunststoffbehältern kommen hierfür beispielsweise Plasma-, Corona- oder gegebenenfalls auch Beflammungsverfahren infrage. Glasbehälter werden üblicherweise silanisiert und beflammt, beispielsweise in einem oder mehreren Schritten und/oder mit mehreren Brennern. Dabei können die zu bedruckenden Oberflächen 1a auch gleichzeitig gereinigt und/oder Vorbeschichtungen aus der Glasproduktion, beispielsweise eine Kaltendvergütung, abgetragen werden. Metallbehälter, also beispielsweise Dosen, werden in der Regel mit Plasma oder Beflammung vorbehandelt. Diese können unlackiert oder vorlackiert sein.

Zugunsten einer ausreichenden Beständigkeit der aufgetragenen Druckschichten 3 bis 6, 43 und 44 kann auf Oberflächen 1a aus Glas ein Haftvermittler, auch als Primer bezeichnet, aufgebracht sein. Hierfür sind Sprühverfahren üblich. Stattdessen wäre prinzipiell auch ein Auftrag mittels Tintenstrahldruckkopf möglich.

Bei transparenten, halbtransparenten oder farbigen Behältern 1 wird vorzugsweise eine erste Druckschicht 3 mit weißer Farbe vollflächig oder partiell als Grundschicht aufgedruckt, um ein rückseitiges Durchscheinen von Farben zu vermeiden und gleichzeitig den Kontrast des Aufdrucks zu erhöhen. Dies kann auf weißen oder anderweitig hellen Behältermaterialen entbehrlich sein.

Die Druckschichten 3 bis 6 umfassen dann ferner in der Regel bunte Druckfarben 7c, die beispielsweise als Bestandteil des CMYK-Farbmodells und/oder als Sonderfarben digital aufgedruckt werden.

Zum Schutz farbiger Druckschichten 3 bis 6, beispielsweise bei der Handhabung der Behälter 1 in der Produktion, bei der Pasteurisierung oder im späteren Gebrauch, wird in der Regel ein Lack 7b (Schutzlack) aufgetragen, auch Varnish genannt. Dieser wird meist im letzten Schritt über alle zuvor aufgebrachten Druckschichten digital aufgedruckt. Dies ist insbesondere bei starren Behälterwänden üblich. Für flexible Behälterwände, beispielsweise solchen aus Kunststoff, sind hierfür dauerhaft flexible Schutzlacke optional verfügbar.

Zur Erzeugung haptischer Oberflächenmerkmale, also beispielsweise der Relieferhebungen 2a, 20a, 40a und gegebenenfalls Reliefvertiefungen 2b, ist der Auftrag einer einzigen Druckschicht 3 bis 6, 43 und 44 beispielsweise in Xaar-High-Laydown-Technologie und/oder mittels hochviskosem Lack möglich, aber auch in mehreren Schichten, beispielsweise 4 bis 16 Schichten, die aufeinander gedruckt werden. Prinzipiell ist eine deutlich größere Anzahl von Druckschichten möglich, welche in der Praxis im Wesentlichen nur durch die Druckersteuerung/Software und/oder Konstruktion der Druckvorrichtung begrenzt ist. Ein derartiger Schichtauftrag 7 ist mit Lacken 7b, insbesondere den zuvor angesprochenen Schutzlacken (Varnish) möglich. Auch pigmenthaltige Druckschichten 3 bis 6, 43 und 44 (Farbschichten, wie beispielsweise Weiß, CMYK und Sonderfarben) können je nach damit möglicher Schichtdicke prinzipiell ebenso verwendet werden.

Zur Verbesserung der Druckqualität und Spreizung verwendeter Systemfarben kann vor dem Auftrag weißer Grundfarbe bzw. nach dem Auftrag von Primer ein Unterdrucklack aufgetragen werden, als sogenanntes Pre-Varnish, wofür sich prinzipiell ein Schutzlack eignet und somit der gleiche Lack 7b, mit dem auch Relieferhebungen 2a, 20a, 40a und Reliefvertiefungen 2b erzeugt werden können.

Die Bestrahlung 9, 10 zur Anhärtung der Druckschichten 3 bis 6, 43 und 44 kann prinzipiell beliebig zwischen und/oder nach dem Schichtauftrag 7 einzelner Druckschichten 3 bis 6, 43 und 44 erfolgen. Üblicherweise erfolgt zusätzlich eine Endhärtung sämtlicher Druckschichten 3 bis 6, 43 und 44 nach dem Auftrag der jeweils obersten Druckschicht 6, 44 beispielsweise mit einer LED-UV-Lampe oder mit einer Quecksilberdampflampe.

Mittels UV-Licht aushärtende Tinten 7a, Lacke 7b und/oder dergleichen Druckfarben 7c bestehen in der Regel aus Bindemitteln, Monomeren, Fotoinitiatoren, Füllstoffen und Additiven, wie beispielsweise Entschäumer, Verlaufsadditive, Verdickungsmittel, Dispergieradditive und/oder Mattierungsmittel. Für die Farbgebung werden bekanntermaßen Pigmente beigemengt.

Die in UV-härtenden Tinten 7a, Lacken 7b und dergleichen Druckfarben 7c enthaltenen Bindemittel bestehen im Wesentlichen aus Monomeren und Pre-Polymeren, meist Acrylatverbindungen. Mit Hilfe der beigemengten Fotoinitiatoren reagieren die flüssigen Acrylatverbindungen unter dem Einfluss von UV-Licht zu einem festen Kunststofffilm. Die Fotoinitiatoren sind Additive für die UV-härtenden Tinten 7a, Lacke 7b und dergleichen Druckfarben 7c. Infolge Lichtabsorption erzeugen die Fotoinitiatoren Reaktionsprodukte (Radikale), die zu einer Vernetzung im Bindemittel führen.

Alternativ sind auch Initiatoren für strahlungshärtende Tinten 7a, Lacke 7b und/oder dergleichen Druckfarben 7c bekannt, die durch Einwirkung von Elektronenstrahlen vergleichbare Reaktionen auslösen.

## Patentansprüche

1. Verfahren zum strahlungsgehärteten Reliefdruck auf Behälter (1), wobei Druckschichten (3-6, 43, 44) mittels Tintenstrahl übereinander auf eine Oberfläche (1a) des jeweiligen Behälters aufgetragen und nacheinander mittels Bestrahlung (9, 10) so gehärtet werden, dass die Druckschichten übereinander und/oder aneinander verlaufen können.

2. Verfahren nach Anspruch 1, wobei wenigstens zwei Druckschichten (3-6) mittels Tintenstrahl übereinander auf die Behälteroberfläche (1a) aufgetragen und einzeln und/oder gemeinsam mittels Bestrahlung (10) so gehärtet werden, dass Randbereiche (3a-6a) der Druckschichten übereinander und/oder aneinander verlaufen können.

3. Verfahren nach Anspruch 1 oder 2, wobei wenigstens eine und insbesondere wenigstens zwei der Druckschichten (3-6) im Volltondruck aufgetragen werden.

4. Verfahren nach einem der vorigen Ansprüche, wobei ein erster Randbereich (6a) einer der Druckschichten (6) einen zweiten Randbereich (5a) einer direkt darunterliegenden Druckschicht (5) gemäß zugeordneter elektronischer Druckvorlagen (15, 16) seitlich überragt, und wobei man den ersten Randbereich zur Behälteroberfläche (1a) hin so verlaufen lässt, dass er den zweiten Randbereich in dessen voller Höhe überzieht.

5. Verfahren nach einem der vorigen Ansprüche, wobei die Druckschichten (3-6) in Abhängigkeit von jeweils zugeordneten elektronischen Druckvorlagen (13-16) wenigstens einen relativ niedrigen Druckbildbereich mit wenigstens einer Druckschicht (3) und wenigstens einen relativ hohen Druckbildbereich mit einer demgegenüber größeren Anzahl von Druckschichten (3-6) im Sinne von Relieferhebung (2a) und/oder Reliefvertiefung (2b) ausbilden.

6. Verfahren nach wenigstens einem der vorigen Ansprüche, wobei wenigstens eine der Druckschichten (3-6) eine Farbschicht und wenigstens eine der Druckschichten (43, 44) eine Schutzlackschicht ist.

7. Verfahren nach wenigstens einem der vorigen Ansprüche, wobei Bestrahlungsdauern und/oder Bestrahlungsstärken für Schritte zur jeweiligen Anhärtung einer oder mehrerer der Druckschichten (3-6, 43, 44) separat für die einzelnen Schritte parametriert werden.

8. Verfahren nach wenigstens einem der vorigen Ansprüche, wobei die Druckschichten (3-6, 43 ,44) durch Bestrahlung (9, 10) mit Licht im Wellenlängenbereich von 10 bis 460 nm und/oder mittels Elektronenstrahl angehärtet werden.

9. Verfahren wenigstens einem der vorigen Ansprüche, wobei Zeitintervalle zwischen Schichtauftrag (7) und zugehöriger Bestrahlung (9, 10) der Druckschichten (3-6, 43, 44) durch Anpassung der Relativgeschwindigkeit der Behälteroberfläche (1a) bezüglich den Druckschichten jeweils zugeordneten Druckköpfen (8) und Strahlungsquellen (11) und/oder durch Einfügen einer Leerdrehung zwischen Schichtauftrag und zugehöriger Bestrahlung eingestellt wird.

10. Verfahren nach wenigstens einem der vorigen Ansprüche, wobei die Behälter (1) bei Schichtauftrag (7) und Bestrahlung (9, 10) der Druckschichten (3-6, 43, 44) um sich selbst gedreht werden und ihre Drehgeschwindigkeit für die Bestrahlung, insbesondere separat von einer Drehgeschwindigkeit beim Strahlauftrag, an eine Viskosität und/oder ein Fließverhalten der/des aufgetragenen Tinte (7a), Lacks (7b) oder dergleichen Druckfarbe (7c) angepasst wird.

11. Verfahren nach wenigstens einem der vorigen Ansprüche, wobei die Druckschichten (3-6, 43, 44) jeweils eine Dicke von 1 µm bis 200 µm aufweisen, insbesondere von 10 µm bis 125 µm, und wobei deren Gesamtschichtdicke nach Aushärtung 1 µm bis 10 mm beträgt, insbesondere 20 µm bis 1 mm.

12. Verfahren nach wenigstens einem der vorigen Ansprüche, wobei die Dicken der Druckschichten (3-6, 43, 44) femer durch Anpassung wenigstens eines der folgenden Parameter der verwendeten Tinten (7a), Lacke (7b) oder dergleichen Druckfarben (7c) eingestellt werden: Viskosität; Oberflächenspannung; Ausstoßtemperatur; Ausstoßgeschwindigkeit; Tropfengröße beim Ausstoß; und Härtungsgeschwindigkeit und/oder Aushärtungsdauer jeweils pro Bestrahlungsdosis, und/oder durch Anpassung eines Zeitintervalls zwischen Schichtauftrag (7) und zugehöriger Bestrahlung (9, 10).

13. Verfahren nach wenigstens einem der vorigen Ansprüche, wobei die Druckschichten (3-6, 43 ,44) während eines kontinuierlichen Transports des Behälters (1), insbesondere auf einem Behälterkarussell, mittels wenigstens eines demgegenüber stationären Druckkopfs (8) angebracht wird.

14. Behälter (1), insbesondere Flasche, Dose, Becher, Trinkglas oder Tube zur Aufnahme flüssiger Endprodukte wie Lebensmittel, mit einem mit dem Verfahren nach wenigstens einem der vorigen Ansprüche aufgetragenen reliefartigen Druckbild (2) umfassend die Druckschichten (3-6, 43, 44).
